**Europäisches Patentamt**

**European Patent Office**

**Office européen des brevets**

(11) Publication number: **0 185 643**
A2

# (12) EUROPEAN PATENT APPLICATION

(21) Application number: **85870177.4**

(22) Date of filing: **10.12.85**

(51) Int. Cl.⁴: **B 60 T 10/00**

---

(30) Priority: **15.12.84 ES 283825 U**

(43) Date of publication of application:
**25.06.86 Bulletin 86/26**

(84) Designated Contracting States:
**AT BE CH DE FR GB IT LI LU NL SE**

(71) Applicant: **Bonet Subirana, Pere
Raval Cortinas Street
Vic (Barcelona)(ES)**

(72) Inventor: **Bonet Subirana, Pere
Raval Cortinas Street
Vic (Barcelona)(ES)**

(74) Representative: **Modrie, Guy et al,
Bureau Gevers SA 7, rue de Livourne Bte 1
B-1050 Bruxelles(BE)**

---

(54) Brake, particularly for motor vehicles.

(57) A brake, particularly for motor vehicles, preferably destined for trucks and trailers, essentially characterized in that the brake is constituted by a hydraulic or air pump (1), of any type, directly acting onto any transmission point (2) of the vehicle or trailer, said operation being done by means of the detected control in the driver's cabin.

EP 0 185 643 A2

The present invention is dealing with a brake, particularly for motor vehicles.

Subject of the invention is a new device for braking vehicles, preferably heavy vehicles, such as trucks and trailers which brake shows very advantageous features in comparison with the traditional braking systems with a total rely on the braking operation, blocking the car without any possibility of accidents which reason could have been the failure of the brake.

As mentioned before, the brake subject of the present invention has been ideated for preferably being applied in trucks, trailers and generally in heavy vehicles where the driver is obliged to combine the foot brake with the electrical brake to avoid overheating of one or the other, aiming to drive most surely on difficult roads, as sudden descents or passes through mountains, etc.

In general lines, the brake is constituted by a hydraulic or air pump of any type of gearing or pistons working as to the will of the driver upon any transmission point of the vehicle or trailer without any failure or breakdown leaving the car blocked.

To better elucidate this invention, a sheet of drawings is joined. As an example there is cited one case of realization.

In the drawings :

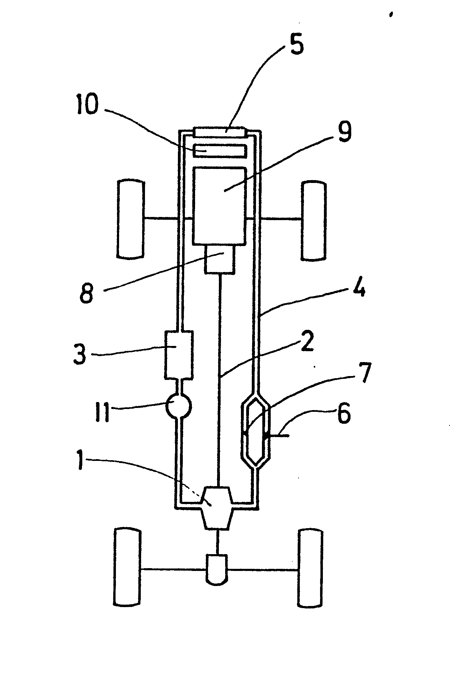

The sole figure illustrates a schematic plan view of a car equipped with a brake subject of the present invention.

With regard to the figure there can be appreciated in its realization a brake constituted by a hydraulic pump (1), or air actuating mechanism, acting directly on any transmission point (2) of the vehicle or trailer.

(3) illustrates the oil tank; (4) illustrates the circuit; (5) illustrates the hydraulic oil radiator; (6) illustrates the closing lever of passing through the oil, duly controlled from the seat of the driver; (7) illustrates a safety valve; (8) illustrates the gearbox; (9) illustrates the motor; and (10) illustrates the motor radiator; (11) represents the oil filter.

## CLAIM .

A brake, particularly for motor vehicles, preferably destined for trucks and trailers, essentially characterized in that the brake is constituted by a hydraulic or air pump (1), of any type, directly acting onto any transmission point (2) of the vehicle or trailer, said operation being done by means of the detected control in the driver's cabin.